# EUROPEAN PATENT SPECIFICATION

(11) **EP 1 615 422 B1**
(45) Date of publication and mention of the grant of the patent: **20.06.2012**
(21) Application number: 05014662.0
(22) Date of filing: 06.07.2005
(51) Int. Cl.: H04N 7/24

(54) **Method of synchronizing still picture with moving picture stream**
Verfahren zum Synchronisieren von Standbildern mit bewegten Bildsequenzen
Procédé de synchronisation entre images fixes et sequences d'images animées

(30) Priority: 07.07.2004 KR 2004052619
(43) Date of publication of application: 11.01.2006
(73) Proprietor: LG Electronics, Inc., Seoul 150-721 (KR)
(72) Inventor: Kwang, Deok Seo, Heungeop-Myeon Wonju-si Gangwon-do (KR)
(74) Representative: Katérle, Axel

(56) References cited:
- JP-A- 10 145 760
- US-A1- 2001 052 133
- US-A1- 2004 086 267

## Description

### BACKGROUND OF THE INVENTION

### Field of the Invention

The present invention relates to a method of synchronizing a still picture with a moving picture stream. Although the present invention is suitable for a wide scope of applications, it is particularly suitable for supporting a multimedia service further using a still picture to provide separate video data as well as moving pictures and voice.

### Discussion of the Related Art

Generally, various systems according to the related art offering multimedia services through real-time transmission of moving pictures and voices have been introduced. For instance, there are a remote video conference system, a remote video education system and the like.

The multimedia service offering systems use the moving pictures coding standard specifications such as H.261, H.263 and MPEG.

So, each of the related art multimedia offering systems combines a moving picture signal and a voice signal together to transmit to a remote client (user terminal) on real time.

Yet, in the process of a remote video conference or a remote video education, conference materials, education materials and the like need to be separately provided. Generally, it is preferable that the conference materials, education materials and the like are provided as a still picture (e.g., JPEG).

However, the above related art systems provide the multimedia services using moving pictures and voices only, thereby being unsuitable for providing separate video data such as the conference materials, the education materials and the like.

US 2004/086267 A1 discloses a multimedia contents delivery system including a delivery server which, upon request by a browsing client, provides a moving image stream as well as a program for obtaining static image data to the browsing client. The program contains reproduction time position information for each of plural static image data pieces associated with the moving image video. During reproduction of the video, the program requests from the delivery server, delivery of relevant static image data at a point in time specified by the reproduction time position information.

JP 10-145760 A is concerned with transmitting static image data during a transmission of moving image data. The method disclosed in this document is suitable for stopping transmission of the moving image data when transmission of static image data is demanded. Transmission of the moving image data is resumed if no further static image data is to be transmitted.

US 2001/052133 A1 discloses transmitting a video broadcast signal together with product information from a server to a client. The product information is displayed by the client to allow a viewer to select a product item and receive additional information on the product while or after watching a broadcast program. The product information is either multiplexed with the video contents or is transmitted in a service information field specified in a digital broadcast standard.

### SUMMARY OF THE INVENTION

The present invention provides a method of providing a multimedia service in accordance with claim 1 and a method of receiving a multimedia service according to claim 7. The present invention further provides a server according to claim 6 and a client according to claim 12.

In one embodiment of a system supporting a multimedia service, a method of synchronizing a still picture with a moving picture stream includes the steps of generating a control data for synchronization of the still picture from a server, providing the control data to a client through a prescribed moving picture frame of the moving picture stream by the server, and synchronizing the still picture with the moving picture stream to display by the client.

Preferably, the method further includes a step of previously providing a code to the client by the server, wherein the code is to indicate that the control data shall be provided.

Preferably, the method further includes the steps of allowing the client to previously receive a code indicating that the control data shall be provided and allowing the client to receive the moving picture frame containing the control data.

In an embodiment of a server providing a multimedia service to a client, a method of synchronizing a still picture with a moving picture stream includes the steps of inserting an identifier of the still picture frame to be synchronized with the moving picture stream in a prescribed moving picture frame of the moving picture stream and transmitting the prescribed moving picture frame including the identifier to the client.

Preferably, the method further includes a step of inserting a code prior to the identifier wherein the code is to indicate that the identifier is included in the moving picture frame.

In an embodiment of a client provided with a multimedia service by a server, a method of synchronizing a still picture with a moving picture stream includes the steps of extracting a moving picture frame including a identifier of the still picture from the moving picture stream, reading the identifier from the moving picture frame, and synchronizing the still picture with the moving picture stream to display using the identifier.

Preferably, the method of claim further includes a step of receiving a code indicating that the moving picture frame including the identifier shall be received.

In another embodiment of a system including a server supporting a multimedia service and a client, a method of synchronizing a picture frame with a picture stream includes the steps of allowing each of the server and the client to store the picture frame, generating control data for synchronization of the picture frame from the server, allowing the server to provide the control data to the client via a prescribed frame of the picture stream, and allowing the client to display the stored picture frame at a synchronization timing point by the control data.

Preferably, the method further includes a step of allowing the server to previously provide the client with a code indicating the prescribed frame to provide the control data.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a diagram of a syntax structure of a moving picture frame of a video coding standard specification according to one embodiment of the present invention;

FIG. 2 is a diagram of a configuration of a transmitting terminal according to one preferred embodiment of the present invention;

FIG. 3 is a flowchart of a procedure of a transmitting terminal to synchronize a still picture with moving pictures according to one preferred embodiment of the present invention;

FIG. 4 is a diagram of a configuration of a receiving terminal according to one preferred embodiment of the present invention; and

FIG. 5 is a flowchart of a procedure of a receiving terminal to synchronize a still picture with moving pictures according to one preferred embodiment of the present invention.

### DETAILED DESCRIPTION OF THE INVENTION

Reference will now be made in detail to the preferred embodiments of the present invention, examples of which are illustrated in the accompanying drawings.

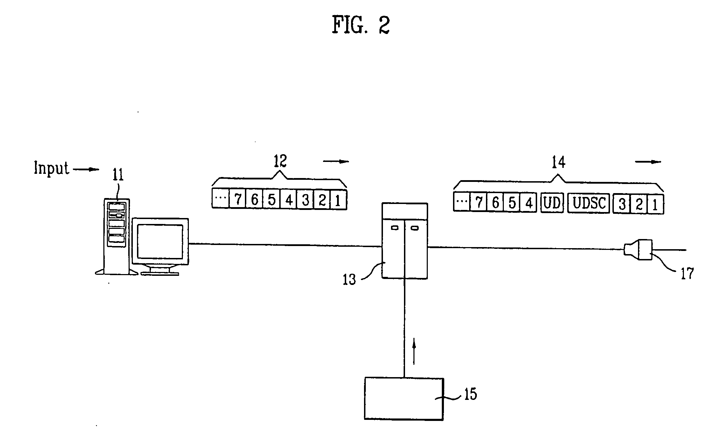

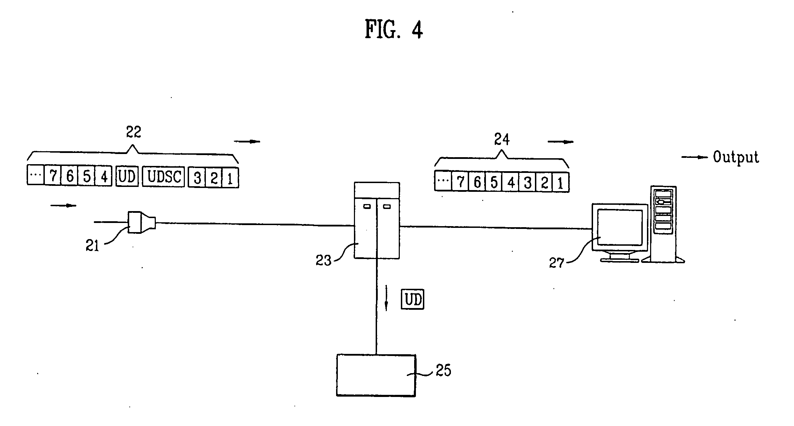

First of all, a system according to the present invention includes a transmitting terminal shown in FIG. 2 and a receiving terminal shown in FIG. 4. And, the system according to the present invention supports a multimedia service via a network.

The system according to the present invention employs a server-client configuration. The server is the transmitting terminal providing the multimedia service and the client (user terminal) is the receiving terminal provided with the multimedia service.

In the present invention, the transmitting terminal provides prescribed multimedia to the receiving terminal. In particular, the multimedia is streamed to the receiving terminal from the transmitting terminal in aspect that the multimedia are transmitted on real time.

The multimedia is a moving picture combined with a voice. Meanwhile, the moving picture, as stated in the following, will be dealt inclusively with the same concept of video or video data.

The system according to the present invention further provides a still picture in the process of streaming the moving picture, i.e., in the process of transmitting a moving picture stream, simultaneously. For this, the system according to the present invention synchronizes a frame corresponding to the corresponding still picture with the moving picture stream.

For instance, the system according to the present invention provides such a multimedia service as a remote video conference service and a remote video education service.

Through the aforesaid services, a conference or education scene is provided as a moving picture stream. And, in case that separate conference data, education data and the like need to be provided as a still picture while the moving picture stream is being provided, a corresponding still picture frame is synchronized with a current moving picture stream.

Hence, the receiving terminal synchronizes the still picture frame, which corresponds to conference data, education data or the like, with the moving picture stream in the process of continuously displaying the moving picture stream and then displays the still picture corresponding to the conference or education data at a time point according to the synchronization. In this case, the still picture is motionless image data.

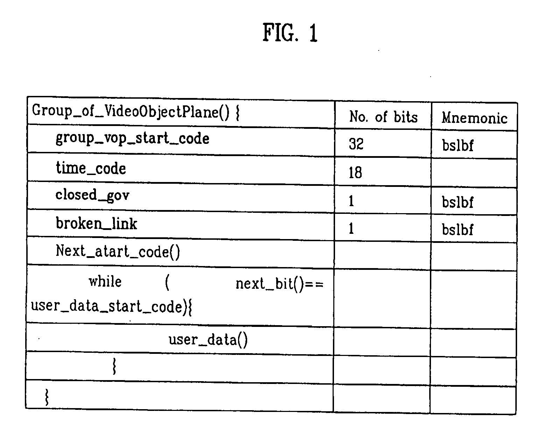

Meanwhile, the moving picture stream includes a plurality of moving picture frames. And, the moving picture frame in the moving picture stream has a User_Data field as a user data area. A syntax of the User_Data field is shown in FIG. 1.

FIG. 1 is a diagram of a syntax structure of a moving picture frame of a video coding standard specification according to one embodiment of the present invention, in which a syntax of MPEG-4 User_Data field is shown.

Preferably, the moving picture of the present invention belongs to the MPEG (moving picture experts group) series as the video coding standard specification. For instance, the MPEG series includes MPEG-1, MPEG-2, MPEG-3, MPEG-4 and the like.

And, it is preferable that the still picture corresponding to the conference or education data in the present invention belongs to the JPEG (joint photographic expert group) series. Yet, the present invention does not put limitation on the above standard specifications for the moving or still picture.

A configuration and operation of a system according to one preferred embodiment of the present invention are explained in detail as follows.

FIG. 2 is a diagram of a configuration of a transmitting terminal according to one preferred embodiment of the present invention.

Referring to FIG. 2, a transmitting terminal includes an encoder 11, a multiplexer 13, a control data generator 15 and a UDP (user datagram protocol) socket 17. And, the transmitting terminal further includes a memory (not shown in the drawing) storing conference data, education data and the like coded into a still picture.

In the present invention, the transmitting terminal stores the still picture of the conference data, education data and the like.

Besides, a receiving terminal shown in FIG. 4 stores the same still picture as well. Hence, the receiving terminal does not receive the still picture from the transmitting terminal actually but receives control data for synchronization of the still picture only.

In particular, the receiving terminal synchronizes the corresponding still picture with a moving picture using the received control data, which will be explained in detail later.

The still picture stored in the memory of the transmitting terminal has a frame structure. And, a unique identifier is given to each still picture. In this case, it is preferable that the identifier is a frame number uniquely given to a still picture frame.

The encoder 11 encodes an inputted moving picture and then outputs a moving picture stream 12 constructed with a plurality of moving picture frames.

In case of intending not to provide any kind of still pictures stored in the memory from the transmitting terminal, the multiplexer 13 bypasses the moving picture stream 12 outputted from the encoder 11.

In contrast, in case of intending to further provide a specific still picture corresponding to the conference or education data to a client from the transmitting terminal, the multiplexer 13 multiplexes control data for synchronization of the specific still picture with the moving picture stream 12 outputted from the encoder 11.

The control data generator 15 generates the control data. Namely, each time a provision of prescribed conference or education data is requested, the control data generator 15 generates control data for synchronization of a corresponding still picture. The control data generator 15 then outputs the generated control data to the multiplexer 13.

And, the corresponding multiplexing is executed in the following manner.

First of all, the control data is inserted in a prescribed moving picture frame of the moving picture frame.

Secondly, the control data is inserted in a User_Data field (cf. FIG. 1) of the prescribed moving picture frame of the moving picture frame 12.

Thirdly, one moving picture frame including the control data is configured to be inserted in the moving picture stream 12. In doing so, the moving picture frame including the control data is configured by the control data generator 15.

Meanwhile, the control data is an identifier uniquely given to identify the still picture corresponding to the prescribed conference or education data from other still pictures. Preferably, the control data is a unique frame identifier to identify a frame of the corresponding still picture from frames of other still pictures and includes one frame number.

Moreover, the transmitting terminal according to the present invention provides a code, which indicates that the control data is provided to inform the receiving terminal of a fact that the control data is provided, to the receiving terminal. Specifically, the transmitting terminal generates the code to provide to the receiving terminal each time the control data is generated. And, the code is provided to the receiving terminal prior to the moving picture frame in which the control data is inserted.

For instance, the transmitting terminal provides the code previously indicating the provision of the control data via a prescribed moving picture frame prior to the frame in which the control data is inserted. And, the code is a USER_DATA_START code (UDSC).

A stream 14 outputted from the multiplexer 13 is configured by inserting the frame, in which the control data for the synchronization of the still picture is inserted, and the USER_DATA_START code (UDSC) in the moving picture stream 12 outputted from the encoder 11.

And, the UDP socket 17 transmits the stream 14 outputted from the multiplexer 13 to the receiving terminal.

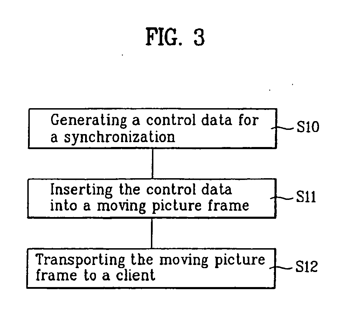

FIG. 3 is a flowchart of a procedure executed by a transmitting terminal to synchronize a still picture with moving pictures according to one preferred embodiment of the present invention.

Referring to FIG. 3, a transmitting terminal, which is a server of a multimedia service, generates control data for synchronization of a still picture corresponding to separate data (conference data, education data, etc.) of the multimedia service (S10).

The still picture is stored as a frame format in a memory and a corresponding still picture frame has a unique frame identifier. And, the frame identifier is to identify the corresponding still picture frame from other still picture frames stored in the memory.

The control data is the' frame identifier of the corresponding still picture. And, the control data is the data generated using the frame identifier of the corresponding still picture.

The transmitting terminal inserts the generated control data in one moving picture frame (S11).

The moving picture frame, in which the control data is inserted, is either one moving picture frame belonging to a moving picture stream of the multimedia service or a prescribed frame configured separate from the moving picture stream.

In particular, the moving picture frame, in which the control data is inserted, has a User_Data field as shown in FIG. 1. And, the control data for synchronization is included in a user_data() function shown in FIG. 1.

Hence, the transmitting terminal transmits the moving picture frame having the control data inserted therein to a receiving terminal, which is a client, together with the moving picture stream according to the multimedia service (S12) .

Meanwhile, the transmitting terminal previously provides a code for indicating that the control data will be provided to the receiving data before the control data is provided to the receiving terminal. In this case, the code is called a USER_DATA_START code (UDSC).

A timing point that the code is provided to the receiving terminal is prior to the moving picture frame in which the control data is inserted. In particular, the code is provided via a frame directly followed by the moving picture frame in which the control data is inserted. Specifically, the code is inserted in a head of the corresponding frame.

The frame used in providing the code is one moving picture frame belonging to the moving picture stream of the currently provided multimedia service or a prescribed frame configured separate from the moving picture stream.

In brief, in the present invention, each of the transmitting and receiving terminals previously stores the picture frame corresponding to the separate data (conference data, education data, etc.) of the multimedia service.

And, in case that a prescribed picture frame needs to be displayed together with a currently played moving picture frame, the transmitting terminal preferentially generates the control data required for the synchronization so that the corresponding picture frame stored in the receiving terminal can be synchronized with the moving picture frame to be displayed. In this case, the control data is a frame identifier for identifying the corresponding picture frame or data generated using the frame identifier.

To previously inform the provision of the control data, the transmitting data provides the code indicating the frame in which the control data is inserted to the receiving terminal and then provides the receiving terminal with the frame in which the generated control data is inserted.

FIG. 4 is a diagram of a configuration of a receiving terminal according to one preferred embodiment of the present invention.

Referring to FIG. 4, a receiving terminal includes a UDP socket 21, a demultiplexer 23, a browser 25, and a decoder 27. And, the receiving terminal further includes a memory (not shown in the drawing) coding conference data, education data and the like into still pictures to store therein. So, the receiving terminal receives control data for synchronization of the corresponding still picture from the transmitting terminal only and outputs the corresponding still picture at a synchronization timing point by the control data together with a moving picture, which will be explained in detail later.

The still picture stored in the memory of the receiving terminal has a frame structure. And, a unique identifier is given to each of the still pictures. In this case, it is preferable that the identifier is a frame number uniquely given to the corresponding still picture.

The UDP socket 21 receives a stream 22 transmitted from the transmitting terminal. The UDP socket 21 then outputs the received stream 22 to the demultiplexer 23.

The demultiplexer 23 outputs moving picture frames 24 of the received stream to the decoder 27.

The decoder 27 then decodes the inputted moving picture frames, whereby a video corresponding to the moving picture frames is outputted.

Besides, the demultiplexer 23 interoperates with the browser 25 to find a code inserted in the received stream. In this case, the code is to indicate the frame in which the control data is inserted. And, the code is a USER_DATA_START code (UDSC) to inform the receiving terminal of a fact that the control data will be provided.

Specifically, since the transmitting terminal transmits the code by inserting the code in the frame followed by the moving picture frame in which the control data is inserted, the demultiplexer 23 of the receiving terminal receives the code, reads the User_Data field of the frame indicated by the received code and then transmits the corresponding control data to the browser 25.

If so, the browser 25 searches the memory for the corresponding still picture frame of the identifier indicated by the control data. The browser 25 then synchronizes the searched still picture with a currently streamed moving picture to display together. In this case, the browser 25 is a JPEG browser.

Meanwhile, a timing point of synchronizing the still picture with the moving picture corresponds to the timing point corresponding to the frame in which the control data is inserted.

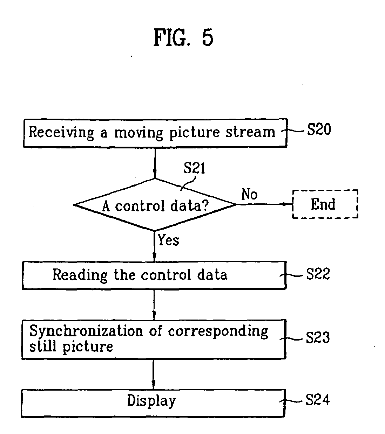

FIG. 5 is a flowchart of a procedure executed by a receiving terminal to synchronize a still picture with moving pictures according to one preferred embodiment of the present invention.

Referring to FIG. 5, a receiving terminal, which is a client of a multimedia service, receives a moving picture stream according to the multimedia service (S20).

The receiving terminal checks whether control data is included in the received moving picture stream (S21).

A process of checking whether the control data is included in the received moving picture stream is explained in detail as follows.

The receiving terminal searches for a code indicating a presence or non-presence of insertion of the control data for synchronization of a still picture. Namely, the receiving terminal searches for a USER_DATA_START code (UDSC). And, the receiving terminal searches for the control data by extracting a moving picture frame indicated by the USER_DATA_START code (UDSC).

The receiving terminal reads the control data from the moving picture frame indicated by the USER_DATA_START code (UDSC).

The receiving terminal searches for a corresponding still picture frame stored in a memory using an identifier indicated by the read control data and then synchronizes the searched still picture with the received moving picture stream (S23) .

The receiving terminal then displays the still picture together with the moving picture at a timing point by the synchronization (S24).

In brief, the transmitting terminal transmits the moving picture of the remote video conference or the remote video education using the MPEG-series moving picture stream. While each of the transmitting and receiving terminals retains the encoded JPEG-series still picture corresponding to the same conference or education data, the receiving terminal receives the control data from the transmitting terminal and then searches for the still picture of the frame number indicated by the received control data via the browser. The receiving terminal then synchronizes the searched still picture with the currently streamed moving picture to display.

And, the system according to the present invention basically secures the synchronization between the moving picture and audio.

Accordingly, the present invention provides the following effects or advantages.

First of all, in case that separate conference data needs to be further provided while a remote video conference system provides a remote video conference service, the present invention facilitates the conference data to be provided as a still picture to the client (user terminal). And, in case that separate education data needs to be further provided while a remote video education system provides a remote video education service, the present invention facilitates the education data to be provided as a still picture to the client (user terminal).

Secondly, the present invention overcomes complexity or degradation of moving picture image quality in configuring the system offering a real-time multimedia service.

Finally, it is apparent to those skilled in the art that the present invention is applicable to various multimedia services implemented on wire/wireless network as well as on Internet.

It will be apparent to those skilled in the art that various modifications and variations can be made in the present invention without departing from the scope of the inventions. Thus, it is intended that the present invention covers the modifications and variations of this invention provided they come within the scope of the appended claims.

## Claims

1. A method of providing a multimedia service, the method performed by a server and comprising the steps of:
- generating (S10) control data (UD) to be used by a client for synchronized display of a still picture pre-stored in the client and a moving picture; and
- providing (S11, S12) a moving picture stream and the control data (UD) to the client, the moving picture stream containing the moving picture;
**characterized in that** the control data (UD) includes a unique identifier of the still picture, and that the providing step (S11, S12) includes the steps of:
- inserting (S11) the identifier (UD) in a moving picture frame of the moving picture stream;
- inserting a code (UDSC) in a moving picture frame of the stream followed by the frame containing the identifier, the code indicating the inclusion of the identifier in a following moving picture frame of the stream; and
- transmitting (S12) the moving picture stream having the inserted identifier and code to the client without transmitting the still image itself.

2. The method of claim 1, wherein the identifier (UD) is inserted in a user data area of a moving picture frame of the stream.

3. The method of claim 2, wherein the code (UDSC) is a user data start code inserted in a header of a moving picture frame of the stream.

4. The method of any one of claims 1 to 3, wherein the moving picture is an MPEG, Moving Picture Experts Group, series.

5. The method of any one of claims 1 to 4, wherein the still picture is a JPEG, Joint Photographic Expert Groug, series.

6. A server configured to provide a multimedia service to a client, the server configured to perform a method as claimed in any one of claims 1 to 5.

7. A method of receiving a multimedia service from a server, the method performed by a client and comprising the steps of:
- receiving (S20) a moving picture stream from the server;
- displaying (S24) a moving picture corresponding to the received moving picture stream;
**characterized by**:
- checking (S21) if the received moving picture stream includes a moving picture frame containing a code (UDSC), the code indicating the inclusion of control data (UD) in the stream, the control data including a unique identifier of a still picture;
- if a moving picture frame containing the code (UDSC) is found in the stream, reading (S22) the control data from a following moving picture frame of the stream;
- searching a memory of the client for a stored still picture corresponding to the identifier indicated by the control data; and
- displaying (S24) the still picture stored in the memory together with the moving picture at a synchronization time point corresponding to the moving picture frame containing the control data (UD).

8. The method of claim 7, wherein the identifier (UD) is inserted in a user data area of a moving picture frame of the stream.

9. The method of claim 8, wherein the code (UDSC) is a user data start code inserted in a header of a moving picture frame of the stream.

10. The method of any one of claims 7 to 9, wherein the moving picture is an MPEG, Moving Picture Experts Group, series.

11. The method of any one of claims 7 to 10, wherein the still picture is a JPEG, Joint Photographic Expert Group, series.

12. A client configured to receive a multimedia service from a server, the client configured to perform a method as claimed in any one of claims 7 to 11.

## Patentansprüche

1. Verfahren zum Bereitstellen eines Multimedia-Dienstes, wobei das Verfahren von einem Server durchgeführt wird und die Schritte umfasst:
- Generieren (S10) von Steuerdaten (UD), die von einem Client für eine synchronisierte Wiedergabe eines in dem Client vorgespeicherten Standbilds und eines Bewegtbilds zu benutzen sind; und
- Bereitstellen (S11, S12) eines Bewegtbild-Streams und der Steuerdaten (UD) an den Client, wobei der Bewegtbild-Stream das Bewegtbild enthält;
**dadurch gekennzeichnet, dass** die Steuerdaten (UD) einen eindeutigen Identifizierer des Standbilds enthalten, und dass der Bereitstellungsschritt (S11, S12) die Schritte umfasst:
- Einfügen (S11) des Identifizierers (UD) in einen Bewegtbild-Rahmen des Bewegtbild-Streams;
- Einfügen eines Codes (UDSC) in einen Bewegtbild-Rahmen des Streams, dem der den Identifizierer enthaltende Rahmen folgt, wobei der Code den Einschluss des Identifizierers in einen folgenden Bewegtbild-Rahmens des Streams angibt; und
- Übertragen (S12) des Bewegtbild-Streams mit dem eingefügten Identifizierer und dem Code an den Client, ohne das Standbild selbst zu übertragen.

2. Verfahren nach Anspruch 1, wobei der Identifizierer (UD) in einen Nutzerdatenbereich eines Bewegtbild-Rahmens des Streams eingefügt wird.

3. Verfahren nach Anspruch 2, wobei der Code (UDSC) ein Nutzerdaten-Startcode ist, der in einen Header eines Bewegtbild-Rahmens des Streams eingefügt wird.

4. Verfahren nach einem der Ansprüche 1 bis 3, wobei das Bewegtbild eines aus der MPEG, Moving Picture Experts Group, Serie ist.

5. Verfahren nach einem der Ansprüche 1 bis 4, wobei das Standbild eines aus der JPEG, Joint Photographic Expert Group, Serie ist.

6. Ein Server, der zum Bereitstellen eines Multimedia-Dienstes an einen Client konfiguriert ist, wobei der Server dazu ausgelegt ist, ein Verfahren nach einem der Ansprüche 1 bis 5 durchzuführen.

7. Verfahren zum Empfang eines Multimedia-Dienstes von einem Server, wobei das Verfahren von einem Client durchgeführt wird und die Schritte umfasst:
- Empfangen (S20) eines Bewegtbild-Streams von dem Server;
- Anzeigen (S24) eines dem empfangenen Bewegtbild-Stream entsprechenden Bewegtbilds;
**gekennzeichnet durch**:
- Überprüfen (S21), ob der empfangene Bewegtbild-Stream einen Bewegtbild-Rahmen aufweist, der einen Code (UDSC) enthält, wobei der Code den Einschluss von Steuerdaten (UD) in dem Stream angibt, wobei die Steuerdaten einen eindeutigen Identifizierer eines Standbilds enthalten;
- falls in dem Stream ein den Code (UDSC) enthaltender Bewegtbild-Rahmen gefunden wird, Lesen (S22) der Steuerdaten aus einem folgenden Bewegtbild-Rahmen des Streams;
- Durchsuchen eines Speichers des Client nach einem gespeicherten Standbild, das dem von den Steuerdaten angegebenen Identifizierer entspricht; und
- Anzeigen (S24) des in dem Speicher gespeicherten Standbilds zusammen mit dem Bewegtbild zu einem Synchronisationszeitpunkt, der dem die Steuerdaten (UD) enthaltenden Bewegtbild-Rahmen entspricht.

8. Verfahren nach Anspruch 7, wobei der Identifizierer (UD) in einen Nutzerdatenbereich eines Bewegtbild-Rahmen des Streams eingefügt wird.

9. Verfahren nach Anspruch 8, wobei der Code (UDSC) ein Nutzerdaten-Startcode ist, der in einen Header eines Bewegtbild-Rahmens des Streams eingefügt wird.

10. Verfahren nach einem der Ansprüche 7 bis 9, wobei das Bewegtbild eines aus der MPEG, Moving Picture Experts Group, Serie ist.

11. Verfahren nach einem der Ansprüche 7 bis 10, wobei das Standbild eines aus der JPEG, Joint Photographic Expert Group, Serie ist.

12. Ein Client, der konfiguriert ist, um einen Multimedia-Dienst von einem Server zu empfangen, wobei der Client dazu ausgelegt ist, ein Verfahren nach einem der Ansprüche 7 bis 11 durchzuführen.

## Revendications

1. Procédé de fourniture d'un service multimédia, le procédé mis en oeuvre par un serveur et comprenant les étapes de :
- génération (S10) de données de contrôle (UD) destinées à être utilisées par un client pour un affichage synchronisé d'une image fixe pré-stockée dans le client et d'une image animée ; et
- fourniture (S11, S12) d'un flux d'images animées et des données de contrôle (UD) au client, le flux d'images animées contenant l'image animée ;
**caractérisé en ce que** les données de contrôle (UD) incluent un identifiant unique de l'image fixe, et **en ce que** l'étape de fourniture (S11, S12) inclut les étapes de :
- insertion (S11) de l'identifiant (UD) dans une trame d'images animées du flux d'images animées ;
- insertion d'un code (UDSC) dans une trame d'images animées du flux suivie de la trame contenant l'identifiant, le code indiquant l'inclusion de l'identifiant dans une trame d'images animées suivante du flux ; et
- transmission (S12) du flux d'images animées ayant l'identifiant et le code insérés au client sans transmettre l'image fixe elle-même.

2. Procédé selon la revendication 1, dans lequel l'identifiant (UD) est inséré dans une zone de données d'utilisateur d'une trame d'images animées du flux.

3. Procédé selon la revendication 2, dans lequel le code (UDSC) est un code de début de données d'utilisateur inséré dans un en-tête d'une trame d'images animées du flux.

4. Procédé selon l'une quelconque des revendications 1 à 3, dans lequel l'image animée est une série MPEG, Moving Picture Experts Group.

5. Procédé selon l'une quelconque des revendications 1 à 4, dans lequel l'image fixe est une série JPEG, Joint Photographic Experts Group.

6. Serveur configuré pour fournir un service multimédia à un client, le serveur configuré pour mettre en oeuvre un procédé selon l'une quelconque des revendications 1 à 5.

7. Procédé de réception d'un service multimédia d'un serveur, le procédé mis en oeuvre par un client et comprenant les étapes de :
- réception (S20) d'un flux d'images animées du serveur ;
- affichage (S24) d'une image animée correspondant au flux d'images animées reçu ;
**caractérisé par** :
- le contrôle (S21) que le flux d'images animées reçu inclut une trame d'images animées contenant un code (UDSC), le code indiquant l'inclusion de données de contrôle (UD) dans le flux, les données de contrôle incluant un identifiant unique d'une image fixe ;
- si une trame d'images animées contenant le code (UDSC) est trouvée dans le flux, la lecture (S22) des données de contrôle à partir d'une trame d'images animées suivante du flux ;
- la recherche dans une mémoire du client d'une image fixe stockée correspondant à l'identifiant indiqué par les données de contrôle ; et
- l'affichage (S24) de l'image fixe stockée dans la mémoire en même temps que l'image animée à un point de synchronisation dans le temps correspondant à la trame d'images animées contenant les données de contrôle (UD).

8. Procédé selon la revendication 7, dans lequel l'identifiant (UD) est inséré dans une zone de données d'utilisateur d'une trame d'images animées du flux.

9. Procédé selon la revendication 8, dans lequel le code (UDSC) est un code de début de données d'utilisateur inséré dans un en-tête d'une trame d'images animées du flux.

10. Procédé selon l'une quelconque des revendications 7 à 9, dans lequel l'image animée est une série MPEG, Moving Picture Experts Group.

11. Procédé selon l'une quelconque des revendications 7 à 10, dans lequel l'image fixe est une série JPEG, Joint Photographic Experts Group.

12. Client configuré pour recevoir un service multimédia d'un serveur, le client configuré pour mettre en oeuvre un procédé selon l'une quelconque des revendications 7 à 11.
